# EUROPEAN PATENT APPLICATION

(11) **EP 0 892 535 A1**
(43) Date of publication of application: **20.01.1999**
(21) Application number: 97112393.0
(22) Date of filing: 18.07.1997
(51) Int. Cl.: H04M 1/60

(54) **Cassette arrangement for handsfree use of a mobile telephone in an automobile**

(71) Applicant: Wang, Ching-Yuan, Taoyuan Hsien (TW)
(72) Inventor: Wang, Ching-Yuan, Taoyuan Hsien (TW)
(74) Representative: Helms, Joachim, Dipl.-Ing. Patentanwalt

(57) **Abstract**

A cassette type handfree handset including a cassette adapted for loading in a cassette tape recorder and player set of an automobile and having a circuit board adapted for transmitting output voice signal from a mobile telephone being connected thereto to the cassette tape recorder and player set for output to speaker means being connected to the cassette tape recorder and player set and a voice signal transmission magnetic head connected to the circuit board and adapted for transmitting voice signal from the circuit board to a magnetic pick-up head of the cassette tape recorder and player set, a cord for connecting to the mobile telephone to transmit output voice signal from it to the circuit board of the cassette, and a microphone adapted to pick up the user's voice and to transmit picked up voice signal to the mobile telephone through the circuit board and the cord.

## Description

### BACKGROUND OF THE INVENTION

The present invention relates to a cassette type handfree handset for a mobile telephone for use in an automobile, and more particularly to such a cassette type handfree handset which comprises a cassette with a circuit board adapted to be loaded in a cassette tape recorder and player set of an automobile for transmitting output voice signal of a mobile telephone to automobile speakers, a cord connected between the circuit board of the cassette and the mobile telephone for signal transmission therebetween, and a microphone adapted for picking up the user's voice and transmitting it to the mobile telephone through the circuit board and the cord.

It is dangerous to use a mobile telephone while driving the car. In order to use a mobile telephone safely when driving, a handfree handset may be installed. A variety of handfree handsets have been disclosed for this purpose, and have appeared on the market. However, these handfree handsets are commonly complicated and expensive, and additional speaker and peripheral hardware means are needed.

### SUMMARY OF THE INVENTION

The present invention provides a cassette type handfree handset which uses with existing automobile's cassette tape recorder and player set and speakers to match with a mobile telephone so that the user can communicate with persons at distance by radio through the mobile telephone without holding it in hand. According to the present invention, the cassette type handfree handset comprises a cassette adapted for loading in a cassette tape recorder and player set of an automobile and having a circuit board adapted for transmitting output voice signal from a mobile telephone being connected thereto to the cassette tape recorder and player set for output to speaker means being connected to the cassette tape recorder and player set and a voice signal transmission magnetic head connected to the circuit board and adapted for transmitting voice signal from the circuit board to a magnetic pick-up head of the cassette tape recorder and player set, a cord for connecting to the mobile telephone to transmit output voice signal from it to the circuit board of the cassette, and a microphone adapted to pick up the user's voice and to transmit picked up voice signal to the mobile telephone through the circuit board and the cord.

### BRIEF DESCRIPTION OF THE DRAWINGS

The foregoing and other features and advantages of the present invention will be more dearly understood from the following detailed description and the accompanying drawings, in which,

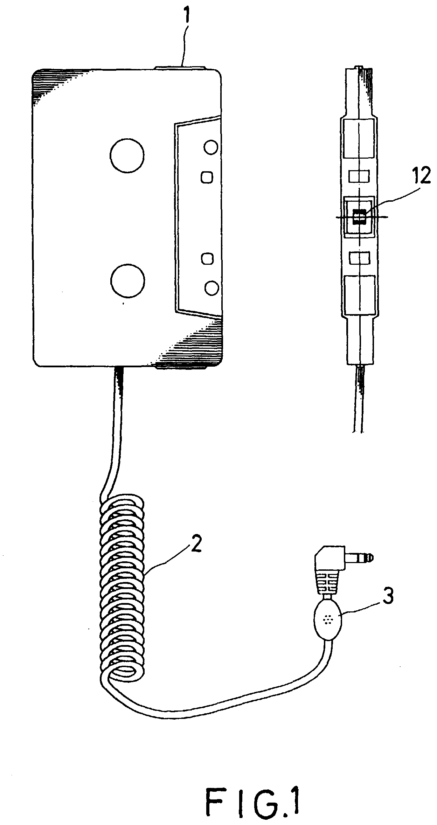

Fig. 1 shows a cassette type handfree handset according to the present invention;
Fig. 2 is an applied view of the present invention, showing the cassette loaded in a cassette tape recorder and player set;
Fig. 3 is a top plain view of the cassette according to the present invention;
Fig. 4 is another top plain view of the present invention, showing the cassette loaded in a cassette tape recorder and player set, the magnetic head of the cassette disposed in contact with the magnetic pick-up head of the cassette tape recorder and player set;
Fig. 5 shows one arrangement of the cord and the microphone according to the present invention;
Fig. 6 shows an alternate arrangement of the cord and the microphone according to the present invention;
Fig. 7 shows another alternate arrangement of the cord and the microphone according to the present invention;

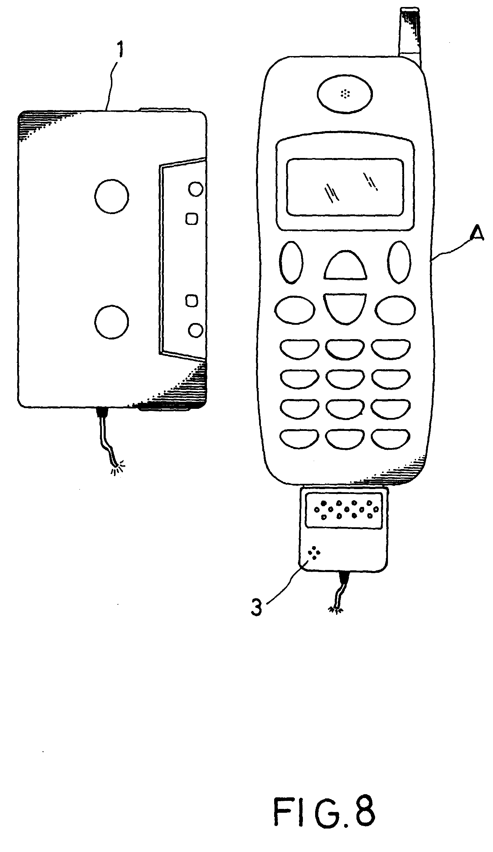

Fig. 8 shows still another alternate arrangement of the cord and the microphone according to the present invention;

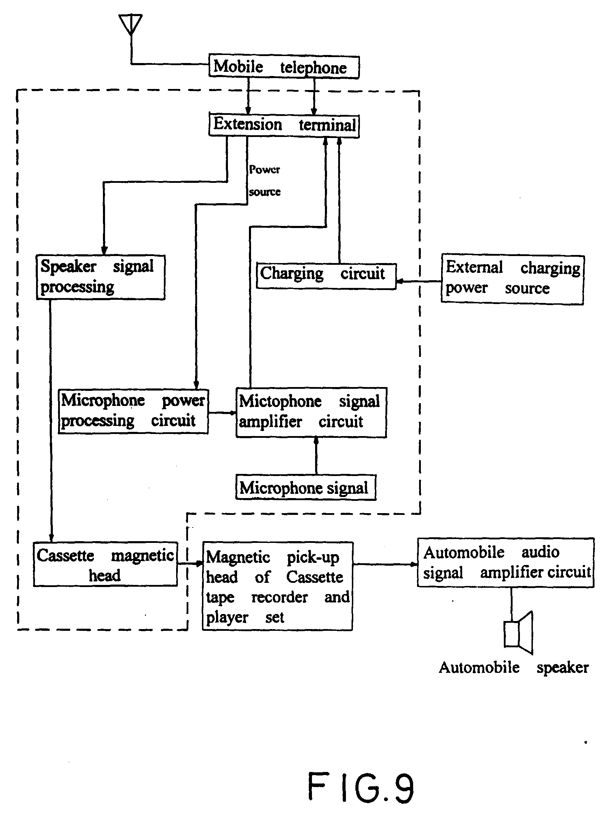

Fig. 9 is a circuit block diagram for use in Figures 6 and 7 according to the present invention; and

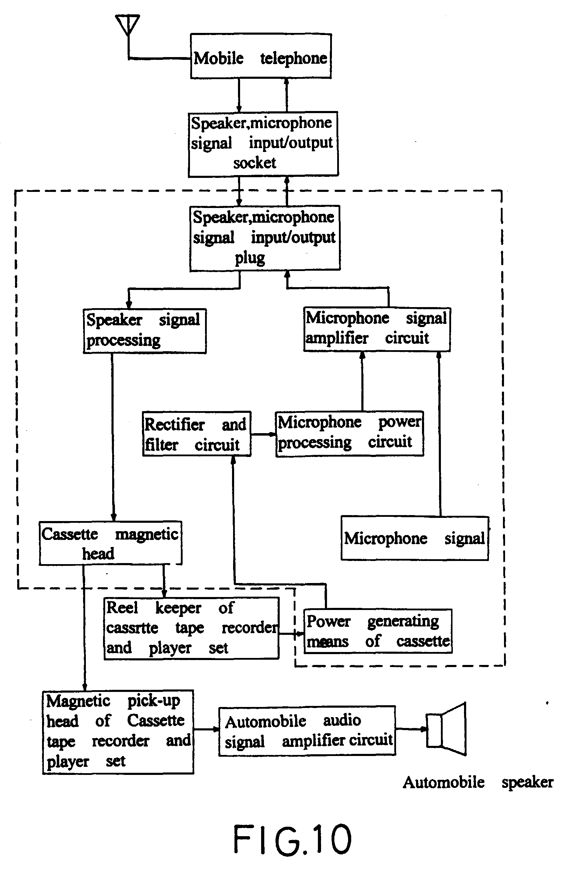

Fig. 10 is a circuit block diagram for use in Figures 1 and 5 according to the present invention.

### DETAILED DESCRIPTION OF THE PREFERRED EMBODIMENT

Referring to the annexed drawings in detail, a cassette type handfree handset for a mobile telephone for use in an automobile in accordance with the present invention is generally comprised of a cassette **1**, a cord **2**, and a microphone **3**. The cord **2** and the microphone **3** are respectively connected to the cassette **1**. The cord **2** is adapted for connecting the cassette **1** to a mobile telephone **A**.

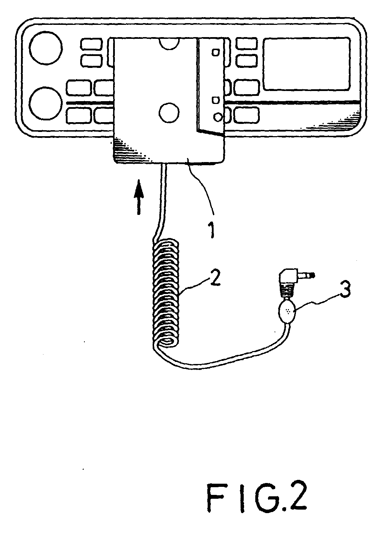

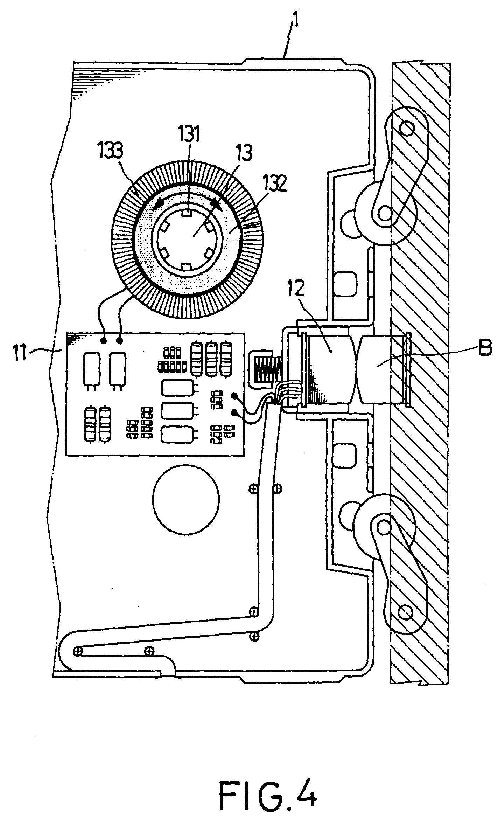

The cassette **1** is adapted for loading in a cassette tape recorder and player set of an automobile (see Figure 2), comprising a circuit board **11** disposed on the inside, and a voice signal transmission magnetic head **12** disposed at one side in the middle. The circuit board **11** comprises microphone amplifier circuit means, charging circuit means, speaker signal processing circuit means, rectifier and filter circuit means, etc., and is adapted to process voice received from the mobile telephone **A** and then to transmit processed signal to the magnetic pick-up head **B** of the cassette player through the voice signal transmission magnetic head **12** (see Figure 4) for further output through the speakers of the audio equipment of the automobile.

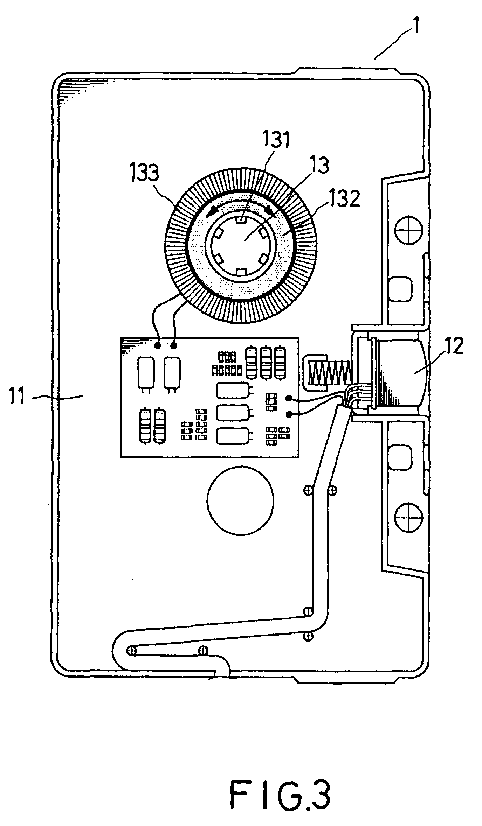

Power supply for the cassette **1** can be obtained from the mobile telephone **A**. Alternatively, power generating means may be directly installed in the cassette **1** and connected to the circuit board **11** to generate electricity and to provide generated electricity to the circuit board **11**. The power generating means, as shown in Figure 3, comprises a hub **13** with teeth **131** adapted for coupling to a reel keeper of the cassette tape recorder and player set of the automobile, a magnetic core **132** fixedly mounted around the hub **13** and turned with the hub **13** by the reel keeper of the cassette tape recorder and player set of the automobile, and a coil **133** fixedly mounted around the magnetic core **132** and induced by it to generate electricity.

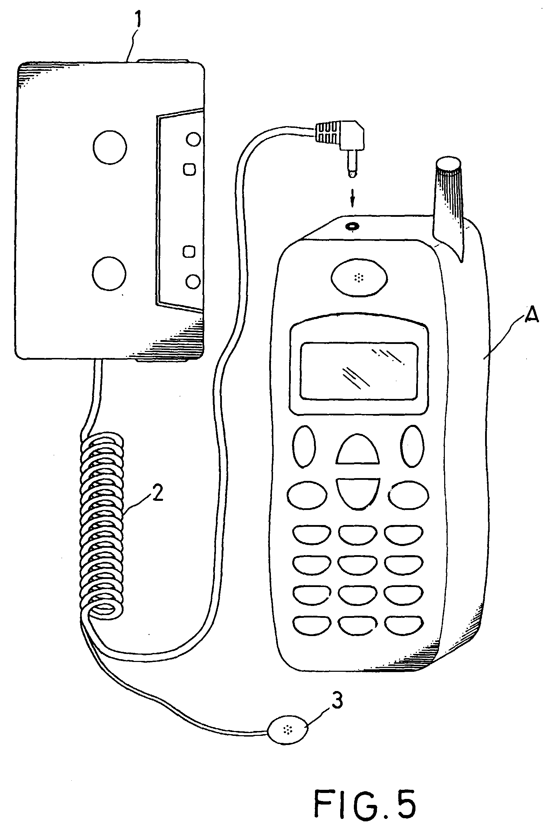

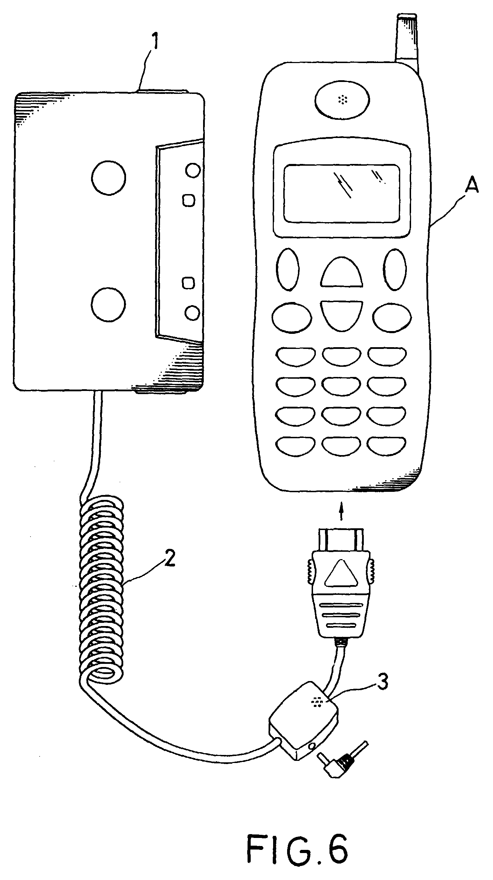

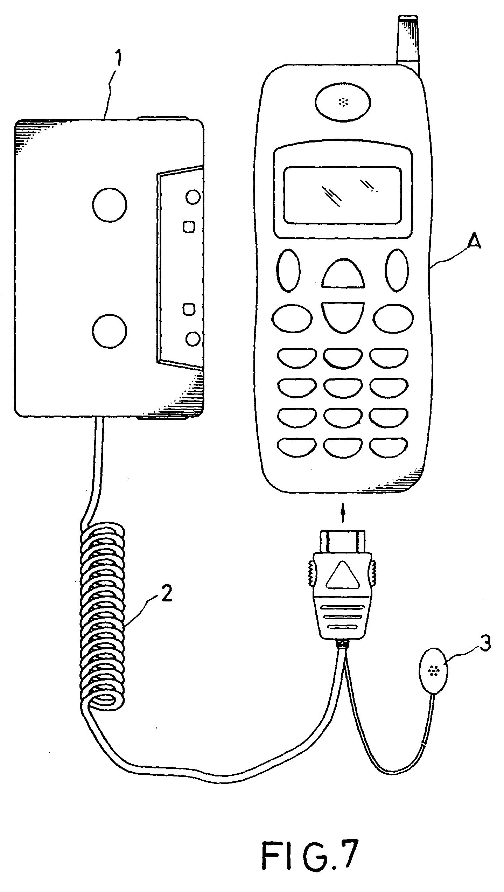

The cord **2** has one end terminating in a connector adapted for connecting to an earphone jack of the mobile telephone **A**, and an opposite end connected to the circuit board **11** of the cassette **1**. The cord **2** may be variously embodied. Figures 5, 6 and 7 show three different alternate forms of the cord **2**.

The microphone **3** is adapted to pick up the user's voice and to transmit picked up voice signal to the circuit board **11** of the cassette **1**, so that the user's voice can be further transmitted from the circuit board **11** to the mobile telephone **A** for sending to the opponent by radio. The microphone **3** can be connected to the cord **2**, or directly connected to the circuit board **11** of the cassette **1** by an electric wire.

As indicated above, the present invention provides a cassette type handfree handset adapted for with a tape recorder and player set of an automobile. When the user's mobile telephone is connected to the cassette type handfree handset and the cassette type handfree handset is installed in a tape recorder and player set of an automobile and connected, the user can communicate with the opponent through the mobile telephone without holding the mobile telephone in hand.

Although the present invention has been illustrated and described with reference to the preferred embodiment thereof, it should be understood that it is in no way limited to the details of such embodiment but is capable of numerous modifications within the scope of the appended claims.

## Claims

1. A cassette type handfree handset comprising a cassette adapted for loading in a cassette tape recorder and player set of an automobile and having a circuit board adapted for transmitting output voice signal from a mobile telephone being connected thereto to said cassette tape recorder and player set for output to speaker means being connected to said cassette tape recorder and player set and a voice signal transmission magnetic head connected to said circuit board and adapted for transmitting voice signal from said circuit board to a magnetic pick-up head of said cassette tape recorder and player set, said circuit board comprising microphone amplifier circuit means, speaker signal processing circuit means and rectifier and filter circuit means, a cord adapted for connecting to said mobile telephone to transmit output voice signal from it to said circuit board of said cassette, and a microphone adapted to pick up the user's voice and to transmit picked up voice signal to said mobile telephone through said circuit board and said cord.

2. The cassette type handfree handset of claim 1, wherein said cassette comprises power generating means adapted for generating power supply and providing generated power supply to said circuit board, said power generating means comprising an internally toothed hub adapted for coupling to a reel keeper of said cassette tape recorder and player set, a magnetic core fixedly mounted around said internally toothed hub and turned with it by the reel keeper of said cassette tape recorder and player set, and a coil fixedly mounted around said magnetic core and induced by it to generate electricity.

3. The cassette type handfree handset of claim 1, wherein said circuit board comprises a charging circuit connected to an external charging power source.
